# EUROPÄISCHE PATENTSCHRIFT

(11) **EP 1 789 289 B1**
(45) Veröffentlichungstag und Bekanntmachung des Hinweises auf die Patenterteilung: **03.12.2008**
(21) Anmeldenummer: 05761169.1
(22) Anmeldetag: 06.07.2005
(51) Int. Cl.: B60R 21/01

(54) **VERFAHREN ZUR ERZEUGUNG EINES AUSLÖSESIGNALS FÜR EINE FUSSGÄNGERSCHUTZVORRICHTUNG**
METHOD FOR GENERATION OF A TRIGGER SIGNAL FOR A PEDESTRIAN PROTECTION DEVICE
PROCEDE DE PRODUCTION D'UN SIGNAL DE DECLENCHEMENT POUR UN DISPOSITIF DE PROTECTION DES PIETONS

(30) Priorität: 02.09.2004 DE 102004042381
(43) Veröffentlichungstag der Anmeldung: 30.05.2007
(73) Patentinhaber: ROBERT BOSCH GMBH, 70442 Stuttgart (DE)
(72) Erfinder: MACK, Frank, 70376 Stuttgart (DE)
(86) Internationale Anmeldenummer: PCT/EP2005/053232
(87) Internationale Veröffentlichungsnummer: WO 2006/024570

(56) Entgegenhaltungen:
- EP-A- 1 270 344
- DE-A1- 10 260 855
- DE-A1- 19 645 952
- DE-A1- 19 827 557

## Beschreibung

### Stand der Technik

Die Erfindung geht aus von einem Verfahren zur Erzeugung eines Auslösesignals für eine Fußgängerschutzvorrichtung nach der Gattung des unabhängigen Patentanspruchs.

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeuge so konstruiert werden, dass die Verletzungen des Fußgängers bei einer Kollision innerhalb der in diesem EU-Gesetz geforderten Grenzen bleiben.

Eine erste Strategie zur Reduzierung von Verletzungen von Fußgänger zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und anschließendes aktives Ansteuern einer Fußgängerschutzvorrichtung, wie beispielsweise von Außenairbags an den A-Säulen und/oder durch Anheben der Motorhaube die benötigte Knautschzone zu schaffen. Bei der aktiven Lösung können die verschiedensten Sensorprinzipien von Beschleunigungs-, Druck-, Klopf-, piezoelektrischen bis optischen Sensoren etc. benutzt werden.

Aus EP 1 270 344 A2 ist es bekannt eine Vorrichtung an einem Fahrzeug zum Schutz einer vom Fahrzeug erfassten Person, sowie Verfahren zum Ansteuern einer Sicherheitseinrichtung vorzusehen. Dabei wird eine Motorhaube dann angehoben, wenn ein Aufprall auf ein Fußgänger erkannt wird. Aus DE 196 45 952 A1 ist es bekannt eine Steueranordnung für ein Rückhaltemittel in einem Kraftfahrzeug vorzusehen, wobei mindestens drei Beschleunigungssensoren vorgesehen sind. In einer Auswerteeinrichtung werden aus mindestens zwei Beschleunigungssignalen die Richtung und die Stärke einer auf das Fahrzeug einwirkenden Beschleunigung ermittelt und zumindest eine der ermittelten Größen wird unter Verwendung eines dritten Beschleunigungssignals überprüft.

### Vorteile der Erfindung

Das erfindungsgemäße Verfahren zur Erzeugung eines Auslösesignals für eine Fußgängerschutzvorrichtung mit den Merkmalen des unabhängigen Patentanspruchs hat Vorteile gemäß Anspruch 1. Es ist bekannt, dass eine ungewollte durch einen defekten Sensor hervorgerufene Auslösung der Fußgängerschutzvorrichtung durch Verwendung von mindestens zwei Sensoren und einer zusätzlichen Plausibilitätsüberprüfung der Sensorsignale nahezu verhindert wird. Bei der Plausibilitätsprüfung werden die Daten der mindestens zwei Sensoren ausgewertet und eine positive Plausibilitätsprüfung wird in vorteilhafter Weise nur dann angezeigt, wenn die Daten einer vorgebbaren Anzahl von ausgewerteten Sensoren eine Kollision mit einem Objekt anzeigen. So kann beispielsweise vorgegebenen werden, dass für eine positive Plausibilitätsprüfung die Daten von mindestens zwei ausgewerteten Sensoren eine Kollision mit einem Objekt anzeigen müssen oder, dass die Daten der Mehrzahl der ausgewerteten Sensoren eine Kollision mit einem Objekt anzeigen.

Zur Plausibilitätsüberprüfung wird in einem ersten Vergleichsvorgang ein erstes Sensorsignal mit einem ersten Schwellwert verglichen und das erste Vergleichsergebnis wird für eine vorbestimmte erste Zeitdauer gehalten, wenn das erste Sensorsignal größer oder gleich dem ersten Schwellwert ist, wobei in einem zweiten Vergleichsvorgang ein zweites Sensorsignal mit einem zweiten Schwellwert verglichen wird und das zweite Vergleichsergebnis für eine vorbestimmte zweite Zeitdauer gehalten wird, wenn das zweite Sensorsignal größer oder gleich dem zweiten Schwellwert ist, wobei das erste Vergleichsergebnis und das zweite Vergleichsergebnis zur Erzeugung des Plausibilitätsergebnisses miteinander logisch verknüpft werden, wobei eine positive Plausibilitätsüberprüfung dann angezeigt wird, wenn das erste und zweite Vergleichsergebnis einen vorgegeben Pegel aufweisen. Die logische Verknüpfung der beiden Vergleichsergebnisse ist beispielsweise als UND- Verknüpfung ausgeführt.

Durch das erfindungsgemäße Verfahren zur Erzeugung eines Auslösesignals wird in vorteilhafter Weise eine sichere und robustere Ansteuerung der Fußgängerschutzvorrichtung ermöglicht, wodurch ein optimaler Schutz der Fußgänger bei gleichzeitiger Minimierung der Kosten gewährleistet wird, die durch eine ungewollte Auslösung der Fußgängerschutzvorrichtung, die durch einem defekten Sensor hervorgerufen wird, entstehen können. Zudem wird verhindert, dass der Fahrer durch eine ungewollte Auslösung der Fußgängerschutzvorrichtung, beispielsweise durch das Aufstellen der Motorhaube, in seinem Lenkverhalten beeinträchtigt wird.

Durch die in den abhängigen Ansprüchen aufgeführten Maßnahmen und Weiterbildungen sind vorteilhafte Verbesserungen des im unabhängigen Patentanspruch angegebenen Verfahrens zur Erzeugung eines Auslösesignals für eine Fußgängerschutzvorrichtung möglich.

Besonders vorteilhaft ist, dass eine Auslöseüberprüfung zur Erkennung eines Fußgängers durchgeführt wird, bei der eine positive vorläufige Auslöseentscheidung getroffen wird, wenn die Datenauswertung ergibt, dass eine Kollision mit einem Fußgänger vorliegt, wobei die Datenauswertung eine Auswertung der Sensordaten der mindestens zwei Sensoren umfasst, und wobei das Auslösesignal für die Fußgängerschutzvorrichtung erzeugt wird, wenn bei der Auslöseüberprüfung eine Kollision mit einem Fußgänger erkannt wird und die Plausibilitätsprüfung der Sensordaten positiv ist. Optional können bei der Auslöseüberprüfung eine Fahrzeugeigengeschwindigkeit und/oder eine Relativgeschwindigkeit berücksichtigt werden. Dadurch wird der Schutz vor einer ungewollten Auslösung der Fußgängerschutzvorrichtung weiter erhöht.

Bei einer vorteilhaften Ausführungsform sind zwei Sensoren, die beispielsweise ein positives Signal erzeugen, wenn eine negative Beschleunigung in Fahrtrichtung detektiert wird, symmetrisch zur Fahrzeuglängsachse in einem Stoßfänger angeordnet.

Durch die symmetrische Anordnung der mindestens zwei Sensoren zur Fahrzeuglängsachse, können die jeweiligen Schwellwerte der beiden Sensoren und die jeweiligen Haltezeitdauern der beiden Sensoren für die Überprüfung des jeweiligen Sensorsignals gleich groß eingestellt werden.

Weiterhin ist es von Vorteil, dass die Schwellwerte und/oder die Haltezeitdauer zur Überprüfung der Plausibilität der Sensorsignale in Abhängigkeit von der Fahrzeugeigengeschwindigkeit und/oder von einer Relativgeschwindigkeit und/oder von anderen Parametern, wie z.B. Temperatur, verändert werden können und somit optimal an verschiedene Umgebungsbedingungen angepasst werden können.

Bei einer weiteren vorteilhaften Ausführungsform des erfindungsgemäßen Verfahrens werden Sensorsignale von drei in einem Stoßfänger angeordneten Sensoren ausgewertet, wobei ein erster Sensor im linken Teil des Stoßfängers, ein zweiter Sensor im rechten Teil des Stoßfängers und ein dritter Sensor in der Mitte des Stoßfängers angeordnet ist, wobei eine positive Plausibilitätsüberprüfung nur dann angezeigt wird, wenn der dritte Sensor und mindestens der erste oder der zweite Sensor eine Kollision mit einem Objekt anzeigen. Durch die beschriebene Anordnung der drei Sensoren steht das Ergebnis der Plausibilitätsüberprüfung aufgrund der kürzeren Signallaufzeiten schneller zur Verfügung als bei der Anordnung mit zwei Sensoren.

Zusätzlich können für die Plausibilitätsüberprüfung und/oder die Auslöseüberprüfung aus den Sensordaten Merkmale extrahiert und/oder berechnet werden, welche ein erstes Integral und/oder ein zweites Integral und/oder Fensterintegrale von unterschiedlicher Zeitdauer und/oder Betragsintegrale und/oder Maximalwerte und/oder Minimalwerte der Verzögerung und/oder Beschleunigung umfassen. Dadurch kann der Schutz vor einer ungewollten Auslösung der Fußgängerschutzvorrichtung weiter verbessert werden.

Weiterhin ist es von Vorteil, wenn zur Plausibilitätsüberprüfung die Sensordaten von Sensoren ausgewertet werden, welche zur Ansteuerung von Insassenschutzmitteln verwendet werden und ohnehin im Fahrzeug vorhanden sind, wodurch sich die Plausibilitätsüberprüfung weiter verbessern lässt.

### Zeichnung

Vorteilhafte Ausführungsbeispiele der Erfindung sind in der Zeichnung dargestellt und werden in der nachfolgenden Beschreibung näher erläutert.

Es zeigen
- Figur 1: ein schematisches Blockdiagramm des Verfahren zur Erzeugung eines Auslösesignals für eine Fußgängerschutzvorrichtung mit zwei Sensoren, und
- Figur 2: ein schematisches Blockdiagramm des Verfahren zur Erzeugung eines Auslösesignals für eine Fußgängerschutzvorrichtung mit drei Sensoren.

### Beschreibung

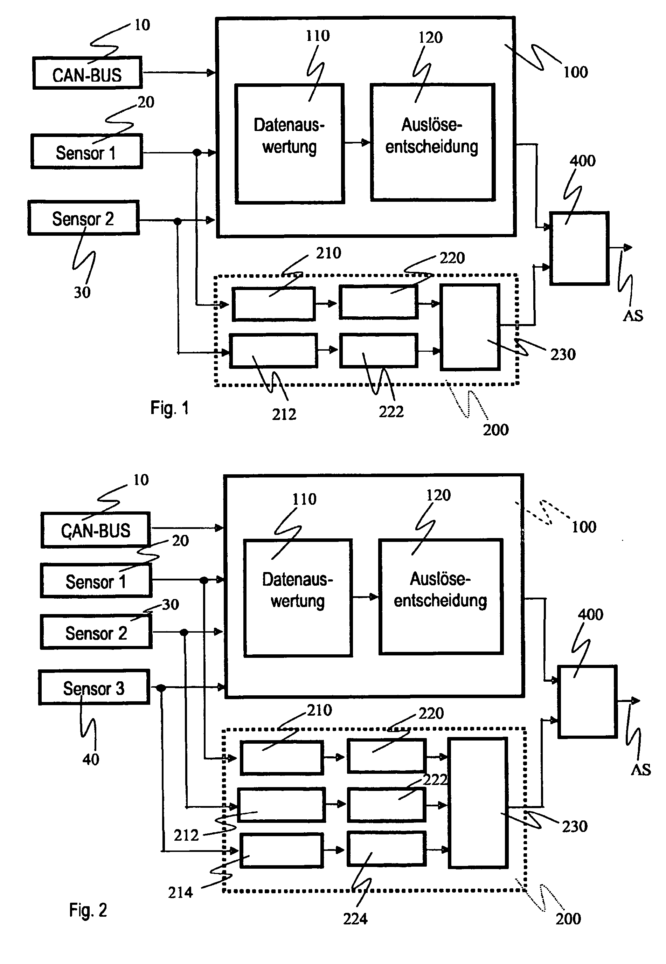

Fig. 1 zeigt ein Ausführungsbeispiel des erfindungsgemäßen Verfahrens, bei dem die Daten von zwei Beschleunigungssensoren 20, 30 für eine Plausibilitätsüberprüfung und/oder eine Auslöseüberprüfung ausgewertet werden können. Optional können auch Daten und Signale die von einem CAN-Bussystem 10 zur Verfügung gestellt werden bei der Auswertung verwendet werden. Das Verfahren wird zwar im Zusammenhand mit Beschleunigungssensoren beschrieben, es kann aber auch auf andere Sensoren, wie z.B. Klopfsensoren, angewandt werden. Zudem können mehr als zwei Sensoren 20, 30 ausgewertet werden, Fig. 2 zeigt beispielsweise eine Ausführungsform, bei welcher drei Sensoren 20, 30, 40 ausgewertet werden.

Die Erfindung beruht darauf, dass mehrere, vorzugsweise zwei Beschleunigungssensoren, die zur Erkennung einer Kollision mit einem Objekt an unterschiedlichen Stellen im Fahrzeugfrontbereich, beispielsweise im Fahrzeugstoßfänger, angeordnet sind, innerhalb einer sehr kurzen Zeitspanne, die beispielsweise nur wenige Millisekunden beträgt, jeweils einen Aufprall registrieren, wenn das Fahrzeug von einem Objekt getroffen wird. Diese Registrierung des Aufpralls ist unabhängig vom Aufprallort des Objektes. Dieser Effekt lässt sich in vorteilhafter Weise für die Plausibilitätsüberprüfung 200 der Sensorsignale verwenden, die parallel zur Auslöseüberprüfung 100 durchgeführt wird. Bei der Auslöseüberprüfung 100 werden aufgrund der Sensorinformationen der beiden Sensoren 20, 30 und anderer vom CAN-Bussystem zur Verfügung gestellten Zusatzinformation, wie z.B. einer Fahrzeugeigengeschwindigkeit und/oder einer Relativgeschwindigkeit, die von Precrashsensoren ermittelt wird, bei der Datenauswertung 110 Merkmale generiert, mit deren Hilfe eine vorläufig Auslösentscheidung 120 getroffen werden kann, wenn Situationen erkannt werden, in denen eine Auslösung der Fußgängerschutzmittel erforderlich ist.

Parallel zur Auslöseüberprüfung 100 wird die Plausibilitätsüberprüfung 200 durchgeführt. Es wird zur einfacheren Erklärung angenommen, dass die Sensoren so verbaut sind, dass sie ein positives Signal generieren, wenn eine negative Beschleunigung, d.h. eine Verzögerung in x-Richtung, d.h. in Fahrtrichtung auftritt. Zur Überprüfung der Plausibilität der Sensorsignale, wird das Signal des ersten Sensors 20 im Block 210 mit einem ersten Schwellwert verglichen. Erreicht und/oder übersteigt das Signal diesen ersten Schwellwert, dann liegt eine größere Verzögerung vor und es wird ein entsprechendes erstes Flag gesetzt, das im Block 220 von einem Halteglied für eine bestimmte erste Zeitspanne gehalten wird. Entsprechend wird das Signal des zweiten Sensors 30 im Block 212 mit einem zweiten Schwellwert 2 verglichen. Erreicht und/oder übersteigt das Sensorsignal des zweiten Sensors 30 den zweiten Schwellwert, dann wird ein entsprechendes zweites Flag gesetzt und im Block 222 durch ein Halteglied für eine bestimmte zweite Zeitspanne gehalten. Diese beiden Flags, welche die jeweiligen Vergleichsergebnisse repräsentieren, werden im Block 230 miteinander verknüpft, beispielsweise durch eine logische UND-Verknüpfung. Somit erzeugt der Block 230 ein Plausibilitätsflag, welches das Ergebnis der Plausibilitätsüberprüfung 200 repräsentiert. Das Plausibilitätsflag wird beispielsweise gesetzt, wenn die Sensorsignale der beiden Sensoren 20, 30 unabhängig voreinander jeweils den erforderlichen Schwellwert übersteigen und somit eine starke Verzögerung registrieren. Die von den beiden Sensoren 20, 30 registrierte starke Verzögerung darf für eine positive Plausibilitätsüberprüfung 200 nicht länger als die vorbestimmte erste und zweite Zeitspanne zurückliegen. Gibt einer der beiden Sensoren 20, 30 aufgrund eines Defekts ein sehr hohes Signal aus, was fälschlicherweise auf eine starke Verzögerung schließen lässt, dann wird dieser Defekt dadurch erkannt, dass der andere der beiden Sensoren 20, 30 keine entsprechende Verzögerung registriert. Das bedeutet, dass in diesem Fall das Plausibilitätsflag nicht gesetzt wird, da eine Auslösung nicht plausibel ist. Die endgültige Auslöseentscheidung wird im Block 400 getroffen, welcher als Eingaben die vorläufige Auslöseentscheidung, beispielsweise als Auslöseflag, und die Plausibilitätsentscheidung, beispielsweise als Plausibilitätsflag empfängt. Zur Erzeugung des Auslösesignals AS wird im Block 400 beispielsweise eine UND-Verknüpfung des Auslöseflags mit dem Plausibilitätsflag durchgeführt. Man erkennt unschwer, dass im Fall eines defekten Sensors, keine Auslösung der Fußgängerschutzvorrichtung erfolgt, da unabhängig von der Auslöseüberprüfung 100 das nicht gesetzte Plausibilitätsflag die Auslösung blockiert. Dadurch kann in vorteilhafter Weise eine ungewünschte Auslösung im Fall eines defekten Sensors zuverlässig verhindert werden. Bei einer symmetrischen Anordnung der beiden Sensoren 20, 30 zur Fahrzeuglängsachse, werden die Schwellwerte in den Blöcken 210 und 212 auf den gleichen Wert gesetzt und die Zeitspannen in den Blöcken 220 und 222 werden ebenfalls auf den gleichen Wert gesetzt

Anstatt das Beschleunigungs- bzw. das Verzögerungssignal direkt mit den Schwellwerten zu vergleichen, können aus diesem Signal andere Größen erzeugt werden, wie z.B. ein erstes Integral und/oder ein zweites Integral und/oder ein Fensterintegral des Beschleunigungs- bzw. das Verzögerungssignals usw., welche dann mit entsprechenden Schwellwerten verglichen werden. Zusätzlich können noch anderen Größen, beispielsweise die Fahrzeugeigengeschwindigkeit und/oder die Relativgeschwindigkeit usw. bei der Plausibilitätsüberprüfung 200 verwendet werden.

Bei einer alternativen, nicht dargestellten Ausführungsform können zur Plausibilitätsüberprüfung 200 auch Sensordaten von anderen im Fahrzeug vorhandenen Sensoren verwendet werden, die beispielsweise zur Ansteuerung von Insassenschutzmitteln, wie z.B. Airbags, im Crashfall benutzt werden. Insbesondere ist hierfür das Signal eines zentralen Beschleunigungssensors im Airbagsteuergerät geeignet. Bei einer solchen Ausführungsform können diese Signale ebenfalls mit entsprechenden Schwellwerten verglichen werden und die so generierten Flagsignale für eine bestimmte Zeitdauer gehalten und mittels logischer Verknüpfungen in die Plausibilitätsentscheidung einbezogen werden.

Fig. 2 zeigt ein Ausführungsbeispiel des erfindungsgemäßen Verfahrens, bei dem die Daten von drei Beschleunigungssensoren 20, 30, 40 für die Plausibilitätsüberprüfung 200 und/oder die Auslöseüberprüfung 100 ausgewertet werden können. Im dargestellten Ausführungsbeispiel sind der erste und zweite Sensor 20, 30 weiterhin symmetrisch zur Fahrzeuglängsachse angeordnet und der dritte Sensor 40 ist auf der Fahrzeuglängsachse angeordnet. Im Unterschied zum Ausführungsbeispiel aus Fig. 1 umfasst die Plausibilitätsüberprüfung 200 einen zusätzliche Block 214, in dem das Signal des dritten Sensors 40 mit einem dritten Schwellwert verglichen wird. Erreicht und/oder übersteigt das Sensorsignal des dritten Sensors 40 den dritten Schwellwert, dann wird ein entsprechendes drittes Flag gesetzt und im Block 224 durch ein Halteglied für eine bestimmte dritte Zeitspanne gehalten. Im Block 230 werden bei diesem Ausführungsbeispiel drei Flags, welche die jeweiligen Vergleichsergebnisse repräsentieren, mit einander verknüpft, um das Plausibilitätsflag zu erzeugen, welches das Ergebnis der Plausibilitälsüberprüfung 200 repräsentiert. Im Ausführungsbeispiel aus Fig. 2 wird das Plausibilitätsflag nur gesetzt, wenn der dritte Sensor 40 und mindestens ein weiterer Sensor 20 oder 30 eine starke Verzögerung registriert haben. Hierzu werden die Signale ersten Sensors 20 mit dem des dritten Sensors 40 mittels einer logischen UND-Verknüpfung zu einem weiteren vierten Flagsignal verknüpft. Genauso wird das Signal des zweiten Sensors 30 mit dem des dritten Sensors 40 zu einem weiteren fünften Flagsignal verknüpft. Zur Erzeugung des Plausibilitätsflags als Ergebnis der Plausibilitätsüberprüfung 200 werden das vierte und fünfte Flagsignal über eine ODER-Verknüpfung mit einander verknüpft. Das Verfahren mit drei Sensoren hat den Vorteil, dass die Plausibilität aufgrund der kürzeren Signallaufzeiten des dritten auf der Fahrzeuglängsachse angeordneten Sensors 40 früher vorliegen, und somit eine noch schnellere Ansteuerung der Schutzmittel möglich ist. Zudem kann vorgesehen werden, dass für eine noch sicherere Plausibilitätsüberprüfung alle drei Sensoren 20, 30, 40 eine Kollision anzeigen müssen. Zudem können noch mehr als drei Sensoren zur Auslöseüberprüfung 100 und/oder zur Plausibilitätsüberprüfung verwendet werden. Zur Auswertung können dann die unterschiedlichsten logischen Verknüpfungen der Sensorsignale verwendet werden, so kann beispielsweise eine n aus m Entscheidung getroffen werden, d.h. n von m vorhandenen Sensoren müssen ein Kollision anzeigen, um eine positives Ergebnis der Plausibilitätsüberprüfung 200 zu erhalten.

## Patentansprüche

1. Verfahren zur Erzeugung eines Auslösesignals (AS), bei welchem Sensordaten ermittelt und ausgewertet werden, wobei dass eine Plausibilitätsprüfung (200) der Sensordaten durchgeführt wird, bei welcher die Daten von mindestens zwei Sensoren (20, 30, 40) ausgewertet werden und eine positive Plausibilitätsprüfung (200) angezeigt wird, wenn die Daten einer vorgebbaren Anzahl von ausgewerteten Sensoren (20, 30, 40) eine Kollision mit einem Objekt anzeigen, **dadurch gekennzeichnet, dass** das Auslösesignal für eine Fußgängerschutzvorrichtung dient, dass zur Plausibilitätsüberprüfung (200) in einem ersten Vergleichsvorgang (210) ein erstes Sensorsignal mit einem ersten Schwellwert verglichen wird und das erste Vergleichsergebnis für eine vorbestimmte erste Zeitdauer (220) gehalten wird, wenn das erste Sensorsignal größer oder gleich dem ersten Schwellwert ist, wobei in einem zweiten Vergleichsvorgang (212) ein zweites Sensorsignal mit einem zweiten Schwellwert verglichen wird und das zweite Vergleichsergebnis für eine vorbestimmte zweite Zeitdauer (222) gehalten wird, wenn das zweite Sensorsignal größer oder gleich dem zweiten Schwellwert ist, wobei das erste Vergleichsergebnis mit dem zweiten Vergleichsergebnis zur Erzeugung des Plausibilitätsergebnisses miteinander logisch verknüpft werden, wobei eine positive Plausibilitätsüberprüfung (200) dann angezeigt wird, wenn das erste und zweite Vergleichsergebnis einen vorgegebenen Pegel aufweisen.

2. Verfahren nach Anspruch 1, **gekennzeichnet durch** eine Auslöseüberprüfung (100) zur Erkennung einer Kollision mit einem Fußgängers, bei der eine positive vorläufige Auslöseentscheidung getroffen wird, wenn die Datenauswertung (110) ergibt, dass eine Kollision mit einem Fußgänger vorliegt, wobei die Datenauswertung (110) eine Auswertung der Sensordaten der mindestens zwei Sensoren (20, 30, 40) und/oder einer Fahrzeugeigengeschwindigkeit und/oder einer Relativgeschwindigkeit umfasst, und wobei das Auslösesignal (AS) für die Fußgängerschutzvorrichtung erzeugt wird, wenn bei der Auslöseüberprüfung (100) eine Kollision mit einem Fußgänger erkannt wird und die Plausibilitätsprüfung (200) der Sensordaten positiv ist.

3. Verfahren nach Anspruch 1 oder 2, **dadurch gekennzeichnet, dass** die mindestens zwei Sensoren (20, 30, 40) ein positives Signal erzeugen, wenn eine negative Beschleunigung in Fahrtrichtung detektiert wird.

4. Verfahren nach Anspruch 1, **dadurch gekennzeichnet, dass** die logische Verknüpfung (230) der beiden Vergleichsergebnisse eine UND-Verknüpfung ist.

5. Verfahren nach Anspruch 1 oder 4, **dadurch gekennzeichnet, dass** die Schwellwerte und/oder die Haltezeitdauer von der Fahrzeugeigengeschwindigkeit und/oder von einer Relativgeschwindigkeit und/oder von anderen Parametern abhängig sind.

6. Verfahren nach einem der Ansprüche 1 bis 5, **dadurch gekennzeichnet, dass** bei einer symmetrischen Anordnung der mindestens zwei Sensoren (20, 30, 40) zur Fahrzeuglängsachse in einem Stoßfänger die Schwellwerte und die Haltezeitdauer für die Überprüfung des jeweiligen Sensorsignals gleich groß sind.

7. Verfahren nach einem der Ansprüche 1 bis 6, **dadurch gekennzeichnet, dass** Sensorsignale von drei in einem Stoßfänger angeordneten Sensoren (20, 30, 40) ausgewertet werden, wobei ein erster Sensor (20) im linken Teil des Stoßfängers, ein zweiter Sensor (30) im rechten Teil des Stoßfängers und ein dritter Sensor (40) in der Mitte des Stoßfängers angeordnet ist, wobei eine positive Plausibilitätsüberprüfung (200) nur dann angezeigt wird, wenn der dritte Sensor (40) und mindestens der erste oder der zweite Sensor (20, 30) eine Kollision mit einem Objekt anzeigen.

8. Verfahren nach einem der Ansprüche 1 bis 7, **dadurch gekennzeichnet, dass** für die Plausibilitätsüberprüfung (200) und/oder die Auslöseüberprüfung (100) aus den Sensordaten Merkmale extrahiert und/oder berechnet werden, welche ein erstes Integral und/oder ein zweites Integral und/oder Fensterintegrale von unterschiedlicher Zeitdauer und/oder Betragsintegrale und/oder Maximalwerte und/oder Minimalwerte der Verzögerung und/oder Beschleunigung umfassen.

9. Verfahren nach einem der Ansprüche 1 bis 8, **dadurch gekennzeichnet, dass** zur Plausibilitätsüberprüfung (200) zusätzlich Sensordaten von Sensoren ausgewertet werden, welche zur Ansteuerung von Insassenschutzmitteln verwendet werden.

## Claims

1. Method for generating a trigger signal (AS), in which sensor data are determined and evaluated, the sensor data being subjected to a plausibility check (200) in which the data from at least two sensors (20, 30, 40) are evaluated and a positive plausibility check (200) is indicated if the data from a predefinable number of evaluated sensors (20, 30, 40) indicate a collision with an object, **characterized in that** the trigger signal is used for a pedestrian protection device, **in that**, for the plausibility check (200), a first sensor signal is compared with a first threshold value in a first comparison operation (210) and the first comparison result is held for a predetermined first period of time (220) if the first sensor signal is greater than or equal to the first threshold value, a second sensor signal being compared with a second threshold value in a second comparison operation (212) and the second comparison result being held for a predetermined second period of time (222) if the second sensor signal is greater than or equal to the second threshold value, the first comparison result and the second comparison result being logically combined with one another in order to generate the plausibility result, a positive plausibility check (200) being indicated when the first and second comparison results have a predefined level.

2. Method according to Claim 1, **characterized by** a triggering check (100) for detecting a collision with a pedestrian, in which a positive preliminary trigger decision is made if the data evaluation (110) reveals that there is a collision with a pedestrian, the data evaluation (110) comprising an evaluation of the sensor data from the at least two sensors (20, 30, 40) and/or a vehicle's own speed and/or a relative speed, and the trigger signal (AS) for the pedestrian protection device being generated if a collision with a pedestrian is detected during the triggering check (100) and the plausibility check (200) of the sensor data is positive.

3. Method according to Claim 1 or 2, **characterized in that** the at least two sensors (20, 30, 40) generate a positive signal if a negative acceleration in the direction of travel is detected.

4. Method according to Claim 1, **characterized in that** the logic combination (230) of the two comparison results is an AND operation.

5. Method according to Claim 1 or 4, **characterized in that** the threshold values and/or the holding period is/are dependent on the vehicle's own speed and/or a relative speed and/or other parameters.

6. Method according to one of Claims 1 to 5, **characterized in that**, when the at least two sensors (20, 30, 40) are arranged in a bumper in a symmetrical manner with respect to the longitudinal axis of the vehicle, the threshold values and the holding period for checking the respective sensor signal are the same.

7. Method according to one of Claims 1 to 6, **characterized in that** sensor signals from three sensors (20, 30, 40), which are arranged in a bumper, are evaluated, a first sensor (20) being arranged in the left-hand part of the bumper, a second sensor (30) being arranged in the right-hand part of the bumper and a third sensor (40) being arranged in the centre of the bumper, a positive plausibility check (200) being indicated only when the third sensor (40) and at least the first or second sensor (20, 30) indicate a collision with an object.

8. Method according to one of Claims 1 to 7, **characterized in that** features which comprise a first integral and/or a second integral and/or window integrals of different durations and/or absolute value integrals and/or maximum values and/or minimum values of deceleration and/or acceleration are extracted and/or calculated from the sensor data for the plausibility check (200) and/or the triggering check (100).

9. Method according to one of Claims 1 to 8, **characterized in that** sensor data from sensors, which are used to drive passenger protection means, are additionally evaluated for the plausibility check (200).

## Revendications

1. Procédé pour générer un signal de déclenchement (AS), selon lequel on détermine et on exploite des données de capteurs,
on effectue une vérification de plausibilité (200) des données de capteurs, consistant à exploiter les données d'au moins deux capteurs (20, 30, 40) et une vérification positive de plausibilité (200) indique si les données exploités d'un nombre prédéfini de capteurs (20, 30, 40) indiquent une collision avec un objet,
**caractérisé en ce que**
le signal de déclenchement sert de dispositif de protection de piéton,
pour la vérification de plausibilité (200),
dans une première opération de comparaison (210), on compare un premier signal de capteur à une première valeur de seuil, et on conserve le premier résultat de comparaison pendant une première durée prédéfinie (220), si le premier signal de capteur est supérieur ou égal à la première valeur de seuil, et
dans une seconde opération de comparaison (212), un second signal de capteur est comparé à une seconde valeur de seuil et on conserve le second résultat de comparaison pendant une seconde durée prédéfinie (222) si le second signal de capteur est supérieur ou égal à la seconde valeur de seuil,
on combine selon une combinaison logique le premier résultat de comparaison au second résultat de comparaison pour générer le résultat de plausibilité, et
on affiche une vérification positive de plausibilité (200) si le premier et le second résultat de comparaison correspondent à un niveau prédéfini.

2. Procédé selon la revendication 1,
**caractérisé par**
une vérification de déclenchement (100) pour reconnaître une collision avec un piéton, vérification par laquelle on prend une décision de déclenchement provisoire positive si l'exploitation des données (110) indique qu'il y a une collision avec un piéton,
l'exploitation des données (110) comprend une exploitation des données de capteurs provenant d'au moins deux capteurs (20, 30, 40) et/ou une vitesse propre du véhicule et/ ou une vitesse relative, et
le signal de déclenchement (AS) est généré pour le dispositif de protection des passagers si la vérification de déclenchement (100) reconnaît une collision avec un piéton et si la vérification de plausibilité (200) des données de capteurs est positive.

3. Procédé selon la revendication 1 ou 2,
**caractérisé en ce qu'**
au moins deux capteurs (20, 30, 40) génèrent un signal positif si une accélération négative est détectée dans la direction de déplacement.

4. Procédé selon la revendication 1,
**caractérisé en ce que**
la combinaison logique (230) des deux résultats de comparaison est une combinaison ET.

5. Procédé selon la revendication 1 ou 4,
**caractérisé en ce que**
les valeurs de seuil et/ou les durées de maintien dépendent de la vitesse propre du véhicule et/ou d'une vitesse relative et/ou d'autres paramètres.

6. Procédé selon les revendications 1 à 5,
**caractérisé en ce qu'**
en cas de dispositions symétriques d'au moins deux capteurs (20, 30, 40) par rapport à l'axe longitudinal du véhicule dans un pare-chocs, les valeurs de seuil et les durées de maintien pour la vérification du signal de capteur respectif sont de même grandeur.

7. Procédé selon les revendications 1 à 6,
**caractérisé en ce que**
on exploite les signaux de capteurs provenant de trois capteurs (20, 30, 40) installés dans un pare-chocs, un premier capteur (20) étant installé dans la partie gauche du pare-chocs, un second capteur (30) étant installé dans la partie droite du pare-chocs, et un troisième capteur (40) étant installé au milieu du pare-chocs, et on indique une vérification positive de plausibilité (200) que si le troisième capteur (40) et au moins le premier ou le second capteur (20, 30) indique une collision avec un objet.

8. Procédé selon les revendications 1 à 7,
**caractérisé en ce que**
pour la vérification de plausibilité (200) et/ou la vérification de déclenchement (100), on extrait et/ou on calcule des caractéristiques à partir des données de capteur, comprenant une première intégrale et/ou une seconde intégrale et/ou une intégrale de fenêtre de durée différente et/ou une intégrale d'amplitude et/ou de valeurs maximales et/ou de valeurs minimales de la décélération et/ou de l'accélération.

9. Procédé selon les revendications 1 à 8,
**caractérisé en ce que**
pour la vérification de plausibilité (200), on exploite en plus des données de capteurs utilisées pour commander les moyens de protection des passagers.
